# FASCICULE DE BREVET EUROPEEN

(11) **EP 2 988 011 B1**
(45) Date de publication et mention de la délivrance du brevet: **21.06.2017**
(21) Numéro de dépôt: 15179880.8
(22) Date de dépôt: 05.08.2015
(51) Int. Cl.: F16C 43/06, F16C 33/58, F16C 19/06, F16C 19/16, F16C 19/36

(54) **SYSTÈME DE BOUCHAGE POUR UNE BAGUE DE ROULEMENT, BAGUE POUR ROULEMENT COMPRENANT UN TEL SYSTÈME ET ROULEMENT COMPRENANT UNE TELLE BAGUE**
VERSCHLUSSSYSTEM FÜR EINEN LAGERRING, RING FÜR LAGER, DER EIN SOLCHES SYSTEM UMFASST, UND LAGER, DAS EINEN SOLCHEN RING UMFASST
CLOSING SYSTEM FOR A BEARING RING, RING FOR BEARING COMPRISING SUCH A SYSTEM AND BEARING COMPRISING SUCH A RING

(30) Priorité: 21.08.2014 FR 1457915
(43) Date de publication de la demande: 24.02.2016
(73) Titulaire: NTN-SNR Roulements, 74000 Annecy (FR)
(72) Inventeur: Pallanchard, Vincent, 74150 RUMILLY (FR); Pourroy-Solari, Vincent, 74230 THONES (FR)
(74) Mandataire: Derambure Conseil

(56) Documents cités:
- GB-A- 2 126 667

## Description

L'invention concerne, de façon générale, le domaine technique des bagues de roulement.

Plus précisément, l'invention concerne le domaine du remplissage des corps roulants d'unités de roulement, encore appelées ci-après roulements, comprenant deux bagues concentriques.

Il est connu de l'art antérieur différentes solutions visant à remplir une rangée de corps roulants par l'intermédiaire d'une découpe prévue sur une bague.

Notamment, la publication DE 10 2008 011060 se rapporte à un roulement comportant une bague intérieure et une bague extérieure. La bague intérieure comprend une découpe. Cette découpe permet le remplissage de corps roulants dans un espace annulaire situé entre les bagues intérieure et extérieure. Un organe de recouvrement est adapté pour venir en recouvrement de la découpe. L'organe de recouvrement est fixé au corps principal de la bague selon un axe parallèle à l'axe du roulement.

Une telle réalisation permet le remplissage d'une rangée de corps roulants dans un roulement comprenant une bague intérieure et une bague extérieure.

En variante, on peut procéder à un remplissage radial des corps roulants comme par exemple décrit dans la publication FR 2 749 624.

En variante, la publication GB 2 126 667 divulgue un système d'ancrage d'un organe de recouvrement obturant un orifice permettant le remplissage de corps roulants dans la bague de roulement, le système d'ancrage étant réalisé par l'insertion latérale d'une goupille dans une rainure pratiquée sur le pourtour de l'organe de recouvrement.

La mise en oeuvre de tels organes de recouvrement, ou bouchons, peut parfois induire des défauts dans un roulement. Notamment, il est utile que le bouchon subisse de manière fiable le même procédé de fabrication que le reste de la bague dont il fait partie afin que, en fonctionnement, la présence d'un bouchon ne soit pas ressentie par le corps roulant. Ainsi, le bouchon fait notamment face à deux problématiques opposées : il doit avoir une position définie très précisément et ce tout au long du procédé de fabrication, et doit être démontable / montable facilement pour permettre l'insertion des corps roulants.

En outre, les bouchons sont soumis à des contraintes importantes. Cela est en particulier le cas pour les roulements dits à rouleaux croisés ou pour les roulements dits à quatre points de contact, qui sont destinés à subir des charges importantes. Dans de tels roulements, les corps roulants ne sont en général pas maintenus par des cages, afin d'avoir une capacité de charge dynamique plus élevée que pour des roulements avec cage. Par conséquent, les corps roulants se déplacent dans l'espace annulaire, en exerçant des contraintes sur les bouchons. Ces derniers tendent alors à se désolidariser des bagues.

Il existe donc un besoin pour un système de bouchage apportant une solution notamment aux inconvénients précités.

Un premier objet de l'invention est de proposer un nouveau système de bouchage pour une bague de roulement, permettant de boucher un trou de remplissage des corps roulants avec une précision accrue.

Un deuxième objet de l'invention est de proposer un nouveau système de bouchage pour une bague de roulement, permettant de boucher un trou de remplissage des corps roulants sans gêner les corps roulants en fonctionnement.

Un troisième objet de l'invention est de proposer un nouveau système de bouchage pour une bague de roulement, facilement montable et démontable.

Un quatrième objet de l'invention est de proposer un nouveau système de bouchage pour une bague de roulement, permettant de boucher un trou de remplissage des corps roulants avec une fiabilité accrue.

A cet effet l'invention propose, selon un premier aspect, un système de bouchage pour une bague de roulement comprenant un corps principal annulaire autour d'un axe de roulement, le corps principal présentant une surface périphérique interne et une surface externe opposée à la surface périphérique interne, l'une des surfaces périphériques interne et externe comprenant une surface de roulement pour des corps roulants du roulement, le corps principal annulaire comprenant en outre un trou traversant de révolution d'axe dit de remplissage, débouchant d'une part sur la surface de roulement et d'autre part sur une surface d'appui axial.
Le système de bouchage comprend :
- un bouchon montable juste pour s'étendre dans le trou traversant de révolution du corps principal, le bouchon comprenant une extrémité de pied, une extrémité de tête et une surface latérale de révolution autour d'un axe de bouchon ;
- des moyens de mise en place dans une position prédéterminée du bouchon par rapport au corps principal, dans laquelle une orientation du bouchon autour de l'axe de remplissage et une profondeur du bouchon selon l'axe de remplissage sont déterminées de sorte que l'extrémité de pied du bouchon et la surface de roulement du corps principal sont continues l'une avec l'autre, formant ensemble un chemin de roulement pour les corps roulants, les moyens de mise en place comprenant un moyen de butée radiale selon un axe de positionnement du corps principal et un moyen de butée selon l'axe de remplissage coopérant avec la surface d'appui axiale, l'axe de positionnement étant non-parallèle à l'axe de remplissage ;
- un système de blocage de l'orientation et de la profondeur prédéterminées du bouchon dans le trou traversant du corps principal, le système de blocage comprenant un organe de maintien présentant une extrémité de contact, le système de blocage comprenant de plus une surface de maintien ménagée sur la surface latérale du bouchon , la normale à la surface de maintien étant inclinée par rapport à l'axe du bouchon d'un angle de maintien différent de 90° dans un plan parallèle à l'axe du bouchon et à l'axe de positionnement, et étant orientée vers l'extrémité de tête du bouchon, l'axe du bouchon étant en outre décalé par rapport à la normale de la surface de maintien au barycentre du contact entre l'organe de maintien et la surface de maintien.

Le système de blocage peut alors prendre un état actif pour bloquer le bouchon sur le corps principal, dans lequel, l'organe de maintien s'étendant dans un perçage du corps principal qui débouche sur le trou traversant de révolution, l'extrémité de contact de l'organe de maintien est en appui contre la surface de maintien du bouchon par au moins un point de contact, et un état inactif dans lequel le bouchon peut être désassemblé du corps principal ouvrant ainsi le trou traversant de révolution pour permettre de faire passer des corps roulants du roulement à travers le trou traversant de révolution.

Le système de bouchage selon l'invention peut en outre présenter les caractéristiques suivantes, considérées seules ou en combinaison :
- l'axe du bouchon est décalé par rapport à la normale de la surface de maintien au barycentre du contact entre l'organe de maintien et la surface de maintien d'une distance supérieure à 10% du diamètre de la surface latérale du bouchon ;
- l'extrémité de contact de l'organe de maintien est une surface plane et dans lequel la surface de maintien est une surface plane, de sorte que le contact entre le bouchon et l'organe de maintien est un appui plan comprenant une pluralité de points de contact ;
- l'extrémité de contact de l'organe de maintien est une surface convexe et dans lequel la surface de maintien est une surface plane, de sorte que le contact entre le bouchon et l'organe de maintien est un contact ponctuel ;
- tout point de contact entre l'organe maintien et le bouchon est à distance de l'axe du bouchon.
- l'organe de maintien est une vis filetée ;
- l'angle de maintien est compris entre 30° et 60° ;
- l'angle de maintien est égal à 45 ° ;
- les moyens de mise en place comprennent une surface inférieure d'un chapeau de l'extrémité de tête du bouchon, la surface inférieure du chapeau étant apte à venir en appui sur la surface d'appui axial du corps principal lorsque le bouchon est placé à la profondeur déterminée par rapport au corps principal ;
- la surface de maintien est écartée de la surface inférieure du chapeau d'une distance selon l'axe du bouchon correspondant au diamètre de la surface latérale du bouchon ;
- le moyen de butée selon l'axe de positionnement comprend une surface non cylindrique formée sur l'extrémité de tête du bouchon apte à coopérer avec une face de butée sur la surface d'appui du corps principal.

Selon un deuxième aspect, l'invention propose une bague de roulement comprenant :
- un corps principal annulaire autour d'un axe de roulement, comportant une surface interne et une surface externe opposée à la surface interne, l'une des surfaces interne et externe comprenant une surface périphérique de roulement pour des corps roulants du roulement, le corps principal annulaire comprenant un trou traversant de révolution d'axe dit de remplissage débouchant d'une part sur la surface périphérique de roulement et d'autre part sur une surface d'appui axial, le corps principal annulaire comprenant des moyens de butée radiale selon un axe de positionnement non-parallèle à l'axe de remplissage, et le corps annulaire comprenant en outre un perçage d'axe de blocage débouchant dans le trou traversant, l'axe de blocage étant incliné d'un angle différent de 90° par rapport à l'axe de remplissage dans un plan parallèle à l'axe de remplissage et à l'axe de positionnement,
- un système de bouchage tel que présenté ci-dessus, dans lequel :
   - le bouchon est monté pour s'étendre dans le trou traversant, l'extrémité de pied placée au niveau de la surface périphérique de roulement du corps principal, l'extrémité de tête placée au niveau de la surface d'appui, l'extrémité de pied étant disposée continue avec la surface de roulement du corps principal et formant avec elle un chemin de roulement pour les corps roulants du roulement,
   - le système de blocage du bouchon sur le corps principal est, dans son état actif, monté pour s'étendre dans le perçage débouchant dans le trou traversant, pour bloquer le bouchon sur le corps principal dans une position relative définie dans laquelle le bouchon (se trouve dans une position prédéterminée, l'organe de maintien sollicitant le bouchon radialement et parallèlement par rapport à l'axe de remplissage.

La bague selon l'invention peut en outre présenter les caractéristiques suivantes, considérées seules ou en combinaison :
- le corps principal comprend une face de butée et dans laquelle le système de blocage, dans son état actif, sollicite le bouchon pour placer la surface non cylindrique de l'extrémité de tête du bouchon en contact avec la face de butée sur la surface d'appui du corps principal ;
- le système de blocage, dans son état actif, sollicite le bouchon pour que la face inférieure du chapeau de l'extrémité de tête soit en contact sur la surface d'appui du corps principal ;
- l'axe de remplissage du corps principal forme avec à l'axe du roulement un angle compris entre 0° et 90°.

Selon un troisième aspect, l'invention propose un roulement comprenant au moins une bague intérieure, une bague extérieure et des corps roulants disposés entre la bague intérieure et la bague extérieure, et adaptés pour rouler sur une surface de roulement de chacune des bagues intérieure et extérieure, dans lequel l'une des bagues intérieure et extérieure est une bague telle que présentée ci-dessus.

Le roulement selon l'invention peut en outre présenter les caractéristiques suivantes, considérées seules ou en combinaison :
- les corps roulants sont des billes, chaque bille ayant au moins un point de contact avec chaque surface de roulement ;
- la surface de roulement sur la bague intérieure et la surface de roulement sur la bague extérieure sont formées chacune par une gorge en V, chacune desdites gorges comportant deux surfaces tronconiques s'étendant circonférentiellement, et dans lequel les corps roulants sont des rouleaux, chaque rouleau présentant deux faces extrêmes plates opposées et une surface cylindrique ou conique, chaque rouleau étant placé entre la bague intérieure et la bague extérieure de sorte que les faces extrêmes de chaque rouleau font face chacune à une surface tronconiques de l'une ou l'autre des bagues intérieure et extérieure et que la surface cylindrique ou conique est en contact avec l'autre surface tronconiques de l'une et l'autre des bagues intérieure et extérieure ;
- les surfaces tronconiques de chacune des gorges se croisent à angle droit, le corps roulants étant des rouleaux cylindriques ;
- le roulement est dépourvu de cage.

On décrit maintenant brièvement les figures des dessins.
La figure 1 est une vue partiellement écorchée d'un roulement.
La figure 2 est une vue en perspective d'un exemple de réalisation d'un bouchon.
La figure 3 est une vue de côté du bouchon de la figure 2.
La figure 4 est une vue de face du bouchon de la figure 2.
La figure 5a est une vue de côté d'un système de bouchage comprenant le bouchon de la figure 2, et une vis coopérant avec le bouchon.
La figure 5b est une vue de face du système de bouchage de la figure 5a.
La figure 5c est une vue en coupe selon l'axe Vc-Vc du système de bouchage de la figure 5a.
La figure 6 est une vue éclatée d'une bague extérieure d'un roulement représentée partiellement selon un premier mode de réalisation et du système de bouchage des figures 5a à 5c.
La figure 7 est une vue de la bague extérieure de la figure 6, en transparence, le système de bouchage étant assemblé sur la bague.
La figure 8a est une vue de dessus du bouchon du système de bouchage inséré dans un trou de la bague, mais non encore bloqué.
La figure 8b est une vue similaire à celle de la figure 8a, dans lequel le bouchon est bloqué sur la bague.
La figure 9 est une vue éclatée en coupe du système de bouchage et de la bague.
La figure 10 est une vue assemblée en coupe du système de bouchage et de la bague.
La figure 11 est une vue tridimensionnelle de détail de la bague extérieure représentée partiellement, avec un système de bouchage selon un deuxième mode de réalisation.
La figure 12 est une vue de dessus de la bague extérieure de la figure 11.
La figure 13 est une vue en perspective du bouchon du système de bouchage des figures 11 et 12.
La figure 14 est une vue en perspective de la bague extérieure de la figure 11, le bouchon ayant été retiré.
La figure 15 est une vue en coupe de détail de la bague extérieure et du système de bouchage des figures 11 à 14.
La figure 16 est une vue en coupe de la figure 12 selon l'axe XVI-XVI.
Les figures 17 et 18 sont des variantes de vis du système de bouchage.

Ci-après un exposé détaillé de plusieurs modes de réalisation de l'invention assortis d'exemple et de références aux dessins.

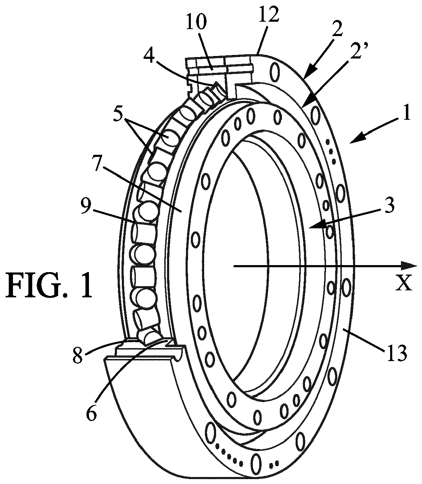

La présente invention se rapporte aux roulements. Un exemple d'un tel roulement **1** est représenté sur la figure 1. Le roulement 1 comprend classiquement une bague **2** extérieure annulaire autour d'un axe **X** de roulement et une bague 3 intérieure annulaire, disposée concentrique avec la bague 2 extérieure autour de l'axe X de roulement. Sur la figure 1, la bague 2 extérieure est représentée en écorchée, afin de découvrir un espace **4** de roulement ménagé entre la bague 2 extérieure et la bague 3 intérieure. L'espace 4 de roulement accueille des corps **5** roulants.

Le roulement 1 est destiné à être utilisé dans un système tournant comprenant par exemple un arbre sur lequel est montée serrée la bague 3 intérieure, et un logement auquel est assemblée la bague 2 extérieure. Ainsi, le roulement 1 est utilisé pour faciliter un mouvement de rotation respective de l'arbre et du logement autour de l'axe X de roulement.

La bague 2 extérieure comprend une surface **6** périphérique annulaire intérieure, faisant face à une surface **7** périphérique annulaire extérieure de la bague 3 intérieure. Les deux surfaces 6, 7 périphériques annulaires définissent entre elles l'espace 4 de roulement. Chacune des surfaces 6, 7 annulaires périphériques extérieure et intérieure comprend une surface **8, 9** de roulement respectivement, qui est la partie de la surface annulaire périphérique respective qui est effectivement au contact des corps roulants 5 lors de l'utilisation du roulement.

A titre d'exemple illustratif, on a représenté un agencement particulier de corps 5 roulants. Les corps 5 roulants sont, selon l'exemple, tous des rouleaux cylindriques, c'est-à-dire comprenant chacun une surface cylindrique entre deux faces extrêmes planes. La longueur des rouleaux peut être égale à leur diamètre.

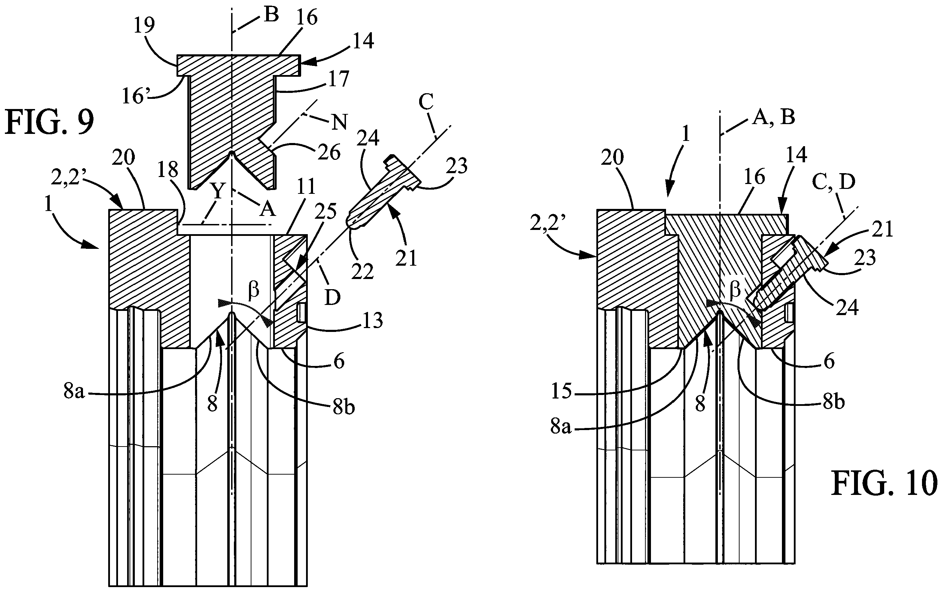

La surface 8, 9 de roulement de chacune des bagues 2 extérieure et 3 intérieure est formée par une gorge en V. Plus précisément, chacune desdites surfaces 8, 9 de roulement comporte deux surfaces tronconiques, lesquelles sont visibles notamment sur les figures 9 et 10 pour la bague 2 extérieure, et sont référencées **8a, 8b.** Les surfaces tronconiques de la gorge de la bague 3 intérieure peuvent être déduites par symétrie de la gorge de la bague 2 extérieure. Dans le cas de rouleaux cylindriques, les surfaces tronconiques de chaque gorge se croisent à angle droit. Les rouleaux 5 sont placés entre la bague 2 extérieure et la bague 3 intérieure de sorte que les faces extrêmes de chaque rouleau 5 font face chacune à une surface annulaire de l'une ou l'autre de la bague 2 extérieure et de la bague 3 intérieure, et que leur surface cylindrique est en contact avec l'autre surface annulaire de la même bague.

Comme illustré sur la figure 1, les rouleaux 5 sont disposés dans un agencement croisé, dans lequel les rouleaux 5 cylindriques sont disposés de manière alternée, selon deux configurations respectives distinctes. Selon une première configuration, la surface cylindrique du rouleau 5 roule sur une première surface 8a tronconique de la gorge 8 de la bague 2 extérieure, et une face extrême du rouleau 5 glisse en tournant sur la deuxième surface 8b tronconique de la gorge 8 de la bague 2 extérieure. Selon une deuxième configuration, la surface cylindrique du rouleau 5 roule sur la deuxième surface 8b tronconique de la gorge 8 de la bague 2 extérieure, et une face extrême du rouleau 5 glisse en tournant sur la première surface 8a tronconique de la gorge 8 de la bague 2 extérieure. Ainsi, deux corps roulants, qui sont ici des rouleaux 5 cylindriques, successifs sont disposés en formant un angle de 90° l'un avec l'autre le long du chemin de roulement de la même bague. Les corps roulants 5 ainsi disposés peuvent être placés avec une très grande concentration le long du chemin de roulement et être maintenus dans le roulement 1 eux-mêmes sans nécessiter de cage. Les corps roulants 5 peuvent être en contact ponctuel deux à deux au niveau de leur surface cylindrique respective adjacente deux à deux.

En variante, les corps 5 roulants peuvent être des rouleaux coniques, c'est-à-dire présentant une surface conique entre deux faces extrêmes planes. Les surfaces 8, 9 de roulement sont également formée par une gorge en V, mais les surfaces tronconiques des gorges en V des bagues 2 extérieure et 3 intérieure ne se croisent alors pas nécessairement à angle droit.

En variante encore, les corps 5 roulants sont des billes. Les surfaces 8, 9 de roulements sur chacune des bagues 2 extérieure et 3 intérieure sont par exemple annulaires autour de l'axe X de roulement. Chaque bille a au moins un point de contact avec chaque surface 8, 9 de roulement.

Les corps 5 roulants sont installés dans l'espace 4 de roulement par l'intermédiaire d'un trou **10** traversant, de révolution d'axe **A** de remplissage, ménagé dans un corps 2' principal annulaire de la bague 2 extérieure ou de la bague 3 intérieure. Dans la suite de la description, il est considéré que la bague 2 extérieure comprend le corps 2' principal. Toutefois, la description peut être aisément transposée au cas dans lequel la bague 3 comprend un tel corps principal. Plus précisément, le trou 10 débouche d'une part sur la surface 8 de roulement de la bague 2 extérieure, et d'autre part sur une surface **11** d'appui axial, dont une normale comprend au moins une composante parallèle à l'axe A de remplissage.

Dans ce qui suit, on désignera par « axial » toute direction parallèle à l'axe A de remplissage.

Selon l'exemple des figures, l'axe A de remplissage est perpendiculaire à l'axe X du roulement. Dans ce cas, la surface 11 d'appui axial est formée sur la surface **12** périphérique extérieure, opposée à la surface 6 périphérique intérieure, de la bague 2 extérieure. Toutefois, l'axe A de remplissage peut ne pas être perpendiculaire à l'axe X de roulement. En particulier, l'axe A de remplissage peut être parallèle à l'axe X de roulement, de sorte que la surface 11 d'appui axial est formée sur une surface **13** latérale de la bague 2 extérieure. Il est entendu que l'axe A de remplissage peut prendre toute inclinaison par rapport à l'axe X de roulement. La surface 11 d'appui axial peut être formée sur une des surfaces 12, 13 de la bague 2 extérieure par exemple par troncature de la surface concernée. Dans l'exemple illustré, la surface 11 d'appui axial est une surface plane, dont la normale est parallèle à l'axe A de remplissage, obtenue en tronquant la surface 12 périphérique extérieure annulaire. En variante, la surface 11 d'appui axial peut être formée par un épaulement entre le trou 10 traversant et un deuxième trou, d'axe A de remplissage, de diamètre supérieur à celui du trou 10 traversant, et débouchant sur la surface 12 périphérique extérieure ou sur la surface 13 latérale de la bague 2 extérieure.

Le trou 10 traversant comporte une géométrie permettant de faire passer des corps 5 roulants à travers celui-ci depuis l'extérieur du roulement 1 jusqu'à l'espace 4 de roulement. Selon la position et la forme des corps 5 roulants, la forme du trou 10 traversant pourra être choisie.

Un système bouchage est utilisé pour boucher le trou 10 traversant. Lorsqu'il est bouché par le système de bouchage, le trou 10 traversant ne peut pas laisser passer de corps 5 roulants à travers lui entre l'espace de roulements 4 et l'extérieur, dans un sens comme dans l'autre, ce qui est nécessaire en particulier lorsque le roulement est en fonctionnement. Lorsque le système de bouchage est absent, les corps 5 roulants peuvent passer à travers le trou 10 traversant entre l'espace 4 de roulement et l'extérieur, dans un sens comme dans l'autre, notamment pour l'assemblage du roulement 1 ou pour des opérations de maintenance.

Le système de bouchage comprend notamment un bouchon **14,** dont les dimensions et la forme lui permettent d'être juste montable dans le trou 10 traversant de la bague 2 extérieure. Plus précisément, le bouchon 14 s'étend entre une extrémité **15** de pied, une extrémité **16** de tête, et comprend entre ses deux extrémités 15, 16 une surface **17** latérale de révolution autour d'un axe **B** de bouchon.

Le système de bouchage comprend alors des moyens de mise en place dans une position prédéterminée du bouchon 14 par rapport à la bague 2 extérieure. Dans cette position prédéterminée, une orientation du bouchon 14 autour de l'axe A de remplissage et une profondeur du bouchon 14 selon l'axe A de remplissage, c'est-à-dire une position axiale du bouchon 14, sont fixées, de sorte que l'extrémité 15 de pied du bouchon 14 et la surface 8 de roulement de la bague 2 extérieure sont continues l'une avec l'autre, formant ensemble un chemin de roulement pour les corps 5 roulants. Ainsi, selon l'exemple dans lequel les corps 5 roulants sont des rouleaux cylindriques et que la surface 8 de roulement est formée par une gorge en V, l'extrémité 15 de pied du bouchon 14 présente également une forme en V similaire, se plaçant dans la continuité de la gorge en V.

Les moyens de mise en place comprennent un moyen de butée selon l'axe A de remplissage. Par exemple, l'extrémité 16 de tête du bouchon 14 forme un chapeau dont une face 16' inférieure est destinée à venir en appui contre la surface 11 d'appui axial, et fixant ainsi la profondeur du bouchon 14 dans le trou 10 traversant.

Les moyens de mise en place comprennent également un moyen de butée radiale selon un axe Y de positionnement, non parallèle à l'axe A de remplissage.

Dans ce qui suit, on désignera de « radiale » toute direction parallèle à l'axe Y de positionnement.

A cet effet, la bague 2 extérieure comprend une face **18** de butée radiale en saillie par rapport à la surface 11 d'appui axial, formant butée selon l'axe Y de positionnement. En d'autres termes, une normale à face 18 de butée radiale comprend au moins une composante parallèle à l'axe Y de positionnement. De manière complémentaire, le bouchon 14 comprend une surface **19** non cylindrique formée sur le bouchon 14, destinée à coopérer avec la face 18 de butée radiale. Selon l'exemple illustré, la face 18 de butée radiale est formée au moyen d'une couronne **20** annulaire autour de l'axe X de roulement, s'étendant en saillie par rapport à la surface 12 périphérique extérieure de la bague 2 extérieure, et présentant une face plane, perpendiculaire à l'axe X de roulement, faisant office de face 18 de butée radiale. La surface 19 non cylindrique du bouchon 14 est par exemple formée par un méplat sur l'extrémité 16 de tête. La face 18 de butée radiale est alors plane, sa normale étant parallèle à l'axe Y de positionnement. Selon cet exemple, l'axe Y de positionnement est parallèle à l'axe X de roulement, et perpendiculaire à l'axe A de remplissage. Toutefois, selon les modes de réalisation, il pourrait en être autrement.

Si le bouchon 14 n'est pas dans la position prédéterminée, par exemple en n'étant pas à la profondeur prédéterminée, il en résulte une marche à franchir pour le corps 5 roulant sur la surface 8 de roulement de la bague 2 extérieure. Si le bouchon 14 n'est pas dans l'orientation prédéterminée, l'extrémité 15 de pied du bouchon n'est pas parfaitement alignée avec la surface 8 de roulement de la bague 2 extérieure. Il en résulte, dans un cas comme dans l'autre, un défaut pouvant entrainer une défaillance du roulement.

Le système de bouchage comprend de plus un système de blocage de la position prédéterminée du bouchon 14 dans le trou 10 traversant de la bague 2 extérieure. A cet effet, le système de blocage comprend un organe **21** de maintien comprenant une extrémité **22** dite de contact. Par exemple, l'organe 21 de maintien est une vis comprenant, outre l'extrémité 22 de contact, une tête **23** et une surface **24** latérale de révolution filetée autour d'un axe **C** de maintien. La bague 2 extérieure comprend un perçage **25** d'axe **D** de blocage et débouchant d'une part dans le trou 10 traversant et d'autre part à l'extérieur de la bague 2 extérieure, par exemple sur la surface 13 latérale ou sur la surface 12 périphérique extérieure de la bague 2 extérieure. De manière complémentaire au filetage de l'organe 21 de maintien, le perçage 25 peut être taraudé. La tête 23 de l'organe de maintien 21 peut être quelconque. Elle peut être conformée pour coopérer avec un outil de type tournevis ou pince.

Le système de blocage comprend en outre une surface **26** de maintien ménagée sur la surface 17 latérale du bouchon 14, sur laquelle l'extrémité 22 de contact de l'organe 21 de maintien est destinée à venir en contact. La surface 26 de maintien est alors définie par sa normale **N** au barycentre du contact avec l'extrémité 22 de contact, laquelle est inclinée par rapport à l'axe B du bouchon d'un angle α de maintien différent de 90°, l'angle α de maintien étant considéré dans un plan parallèle à l'axe B du bouchon et à la normale N. Ainsi, la normale N de la surface 26 de maintien comprend une composante parallèle à l'axe B du bouchon et au moins une composante radiale, c'est-à-dire perpendiculaire, à l'axe B du bouchon.

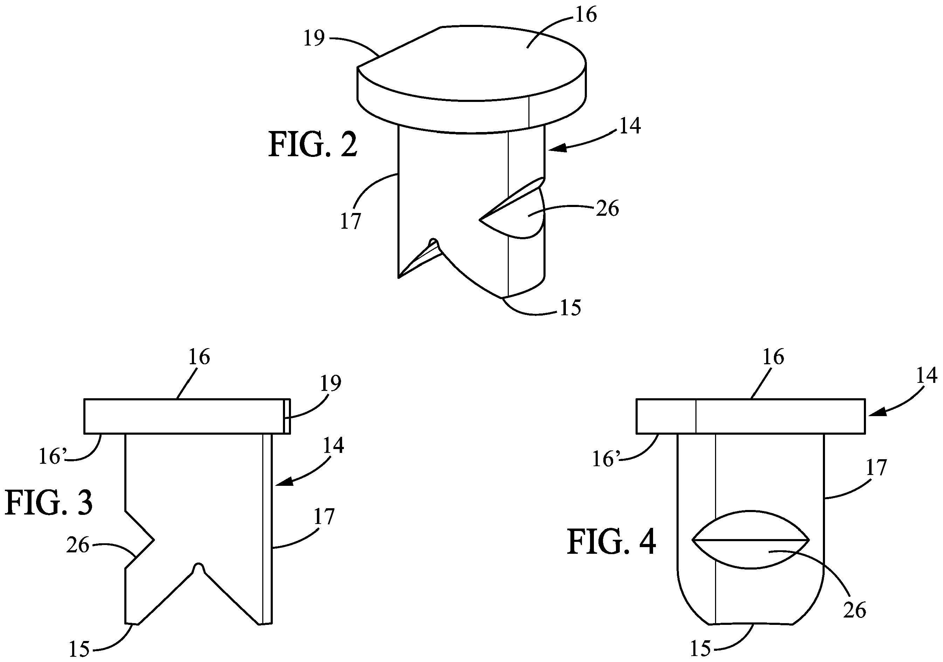

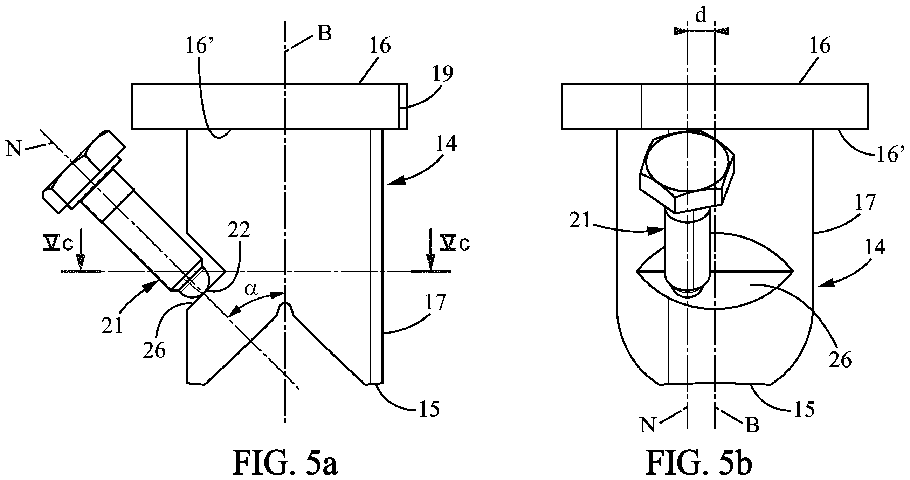

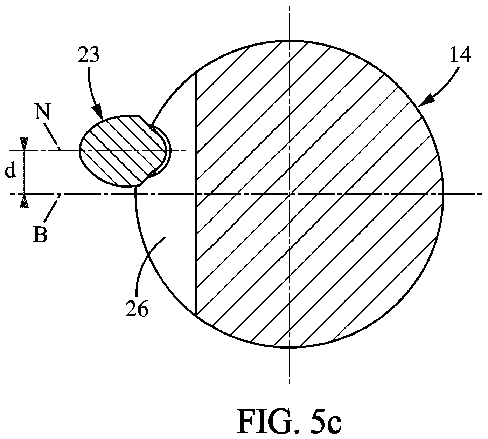

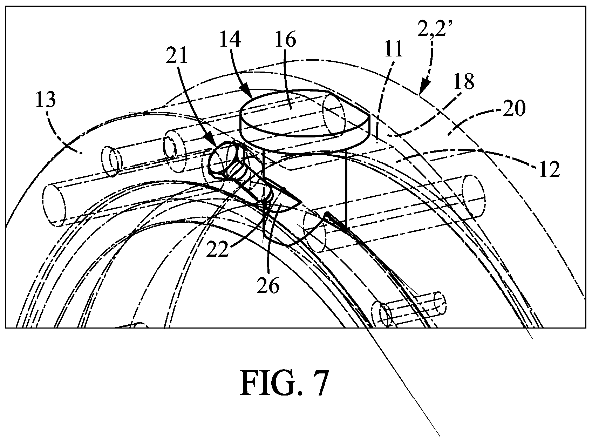

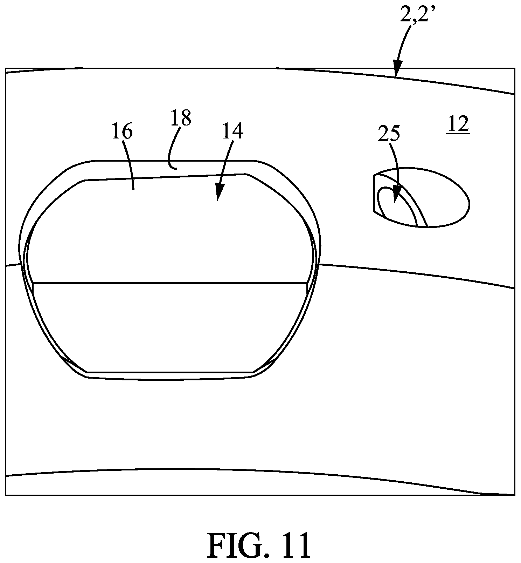

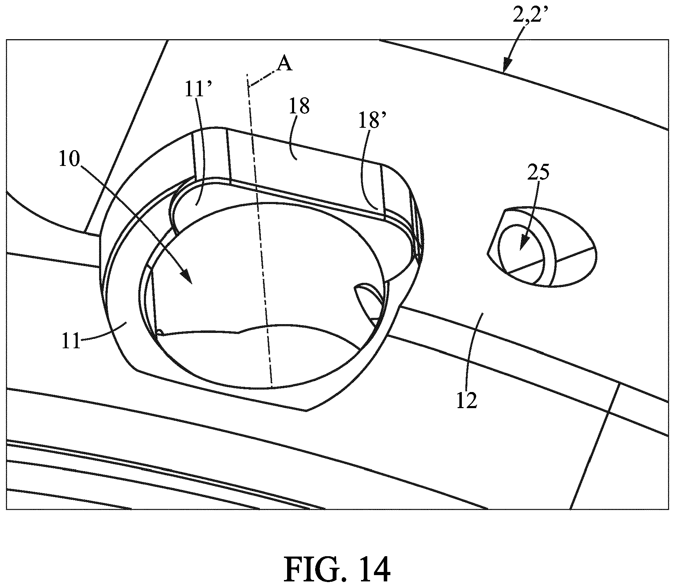

Par exemple, comme illustré sur les figures 2 à 10, la normale N à la surface 26 de maintien et la normale au méplat 19 comprennent chacune une composante selon l'axe Y de positionnement, orientée chacune dans les deux directions opposées, et le perçage 25 d'axe D débouche sur la surface 13 latérale. En d'autres termes, l'angle α de maintien est considéré dans un plan parallèle à l'axe B du bouchon et à l'axe Y de positionnement. En variante, comme illustré sur les figures 11 à 16, la normale N à la surface 26 de maintien comprend une composante perpendiculaire au plan passant par l'axe B du bouchon et l'axe Y de positionnement, et le perçage 25 d'axe D débouche sur la surface 12 périphérique extérieure de la bague 2 extérieure.

La surface 26 de maintien est orientée vers l'extrémité 16 de tête du bouchon 14. Ainsi, lorsque le bouchon 14 est placé dans le trou 10 traversant selon la position prédéterminée et que l'organe 21 de maintien est inséré dans le perçage 22, l'extrémité 22 de contact de l'organe 21 de maintien vient en contact avec la surface 26 de maintenant, exerçant un effort selon l'axe B du bouchon 14 tendant à maintenir le contact entre la face 16' inférieure du chapeau de l'extrémité 16 de tête du bouchon 14 et la surface 11 d'appui axial.

La surface 26 de maintien est par exemple plane, et formée par une encoche en forme de coin dans la surface 17 latérale du bouchon 14. Avantageusement, et comme il sera explicité plus loin, la surface 19 non cylindrique et la surface 26 de maintien sont décalées angulairement l'une par rapport à l'autre, c'est-à-dire par exemple que la normale au méplat 19 forme un angle avec l'axe Y de positionnement dans un plan perpendiculaire à l'axe B du bouchon.

L'axe D de blocage du perçage 25 forme par exemple avec l'axe A de remplissage un angle ß sensiblement égal à l'angle α de maintien, mais non nécessairement, dans un plan parallèle à l'axe A de remplissage. De manière générale, l'axe D du perçage 25 est cependant incliné d'un angle ß différent de 90° par rapport à l'axe A de remplissage, dans un plan parallèle à l'axe A de remplissage et à l'axe Y de positionnement. L'axe D de blocage est en outre décalé par rapport à l'axe A de remplissage de sorte que l'organe 21 de maintien inséré dans le perçage 25, avec son axe C sensiblement confondu avec l'axe D de blocage, vient en contact avec le bouchon 14 sur la surface 26 de maintien, de sorte que la normale N au barycentre du contact est décalée de l'axe B du bouchon 14. L'organe 21 de maintien exerce alors sur le bouchon 14 un effort comprenant une composante axiale, et une composante radiale.

Toutefois, de par la forme de révolution autour de l'axe A de remplissage du trou 10 traversant et de la surface 17 latérale du bouchon, le bouchon 14 peut avoir tendance à pivoter autour de l'axe A de remplissage. Afin d'empêcher la rotation du bouchon 14 dans le trou 10 traversant, l'axe B du bouchon 14 est décalé par rapport à la normale N de la surface 26 de maintien au barycentre du contact entre l'organe 21 de maintien et la surface 26 de maintien. Par « décalé », on entend ici qu'il existe un premier plan contenant l'axe B du bouchon 14 et un deuxième plan contenant la normale N de la surface 26 de maintien au barycentre du contact, le première plan étant parallèle au deuxième plan. En d'autres termes, si on considère le contact entre l'extrémité 22 de contact de l'organe 21 de maintien et la surface 26 de maintien comme étant un unique point de contact, alors le décalage d entre l'axe B du bouchon et la normale N à la surface 26 de maintien est constaté au point de contact. Pour généraliser, si on considère le contact entre l'extrémité 22 de contact de l'organe 21 de maintien et la surface 26 de maintien comme étant une pluralité de points de contact, alors le décalage **d** entre l'axe B du bouchon et la normale N à la surface 26 de maintien est constaté au barycentre des points de contact. Ainsi, la normale N à la surface 26 de maintien au barycentre des points de contact, n'est pas sécante avec l'axe B du bouchon 14.

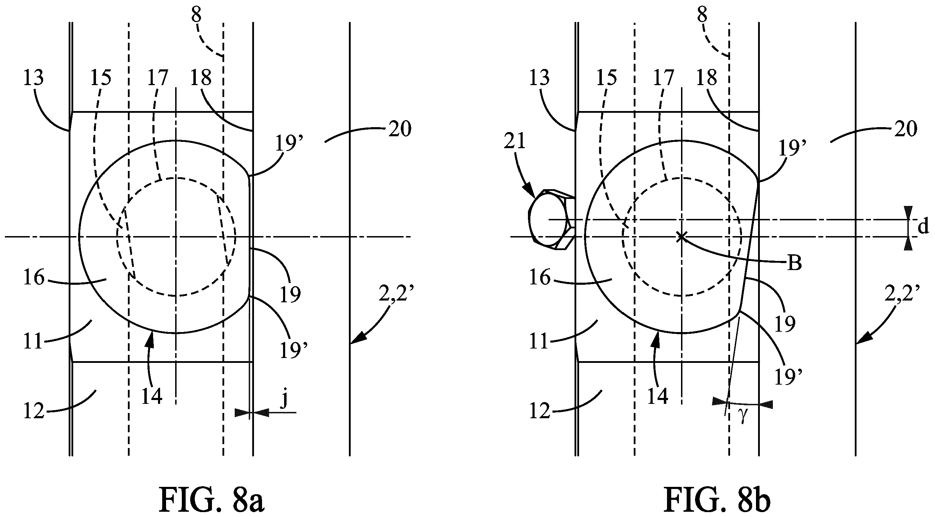

L'orientation du bouchon 14 autour de l'axe A de remplissage est bloquée grâce à l'organe 21 de contact dans l'état actif. En effet, afin de faciliter le montage du bouchon 14 dans le trou 10 traversant, un jeu **j** minimal, représenté de manière exagérée sur la figure 8a, est formé entre le méplat 19 de l'extrémité 16 de tête du bouchon 14 et la face 18 de butée radiale de la bague 2 extérieure. Un débattement du bouchon autour de l'axe A de remplissage, engendrant un mauvais alignement de la forme en V de l'extrémité 15 de pied avec la surface 8 de roulement de la bague 2 extérieure, est alors possible. Dans l'état actif du système de blocage, représenté notamment sur la figure 8b, l'organe 21 de maintien exerçant un couple tendant à faire pivoter le bouchon 14 autour de l'axe A jusqu'à ce que la surface 19 non cylindrique, qui est selon l'exemple présenté ici un méplat, vienne en butée contre la face 18 de butée radiale. Entre le méplat 19 et la face 18 de butée radiale, un angle γ est alors formé, représenté là aussi de manière exagérée sur la figure 8b. Il est également représenté en traits discontinus, là encore de manière exagérée, sur les figures 8a et 8b, la rotation effectuée par le bouchon 14 pour que l'extrémité 15 de pied vienne dans l'alignement de la surface 8 de roulement de la bague 2 extérieure. Toute rotation du bouchon 14 autour de l'axe A de remplissage est alors bloquée d'une part par le contact entre l'extrémité 22 de contact de l'organe de maintien et la surface 26 de maintien et d'autre part par la coopération entre le méplat 19 du bouchon 14 avec la surface 18 de butée radiale. Comme la normale au méplat 19 n'est pas strictement perpendiculaire à l'axe Y de positionnement, lorsque le système de blocage est dans l'état actif, la forme en V de l'extrémité 15 de pied du bouchon 14 est alors parfaitement alignée avec la forme en V de la surface 8 de roulement de la bague 2 extérieure, pour former un chemin de roulement pour les corps 5 roulants.

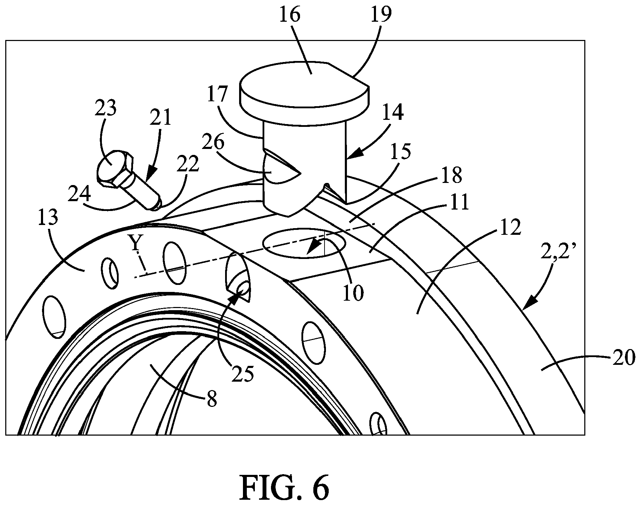

Selon un premier mode de réalisation (figures 6 à 10), le perçage 25 d'axe D débouche d'une part dans le trou 10 traversant et d'autre part à l'extérieur de la bague 2 extérieure sur la surface 13 latérale. L'axe D du perçage 25 comprend alors une composante parallèle à l'axe Y de positionnement et une composante parallèle à l'axe A de remplissage. La projection de l'axe D du perçage 25 dans un plan perpendiculaire à l'axe A de remplissage peut toutefois être incliné par rapport à l'axe Y de positionnement.

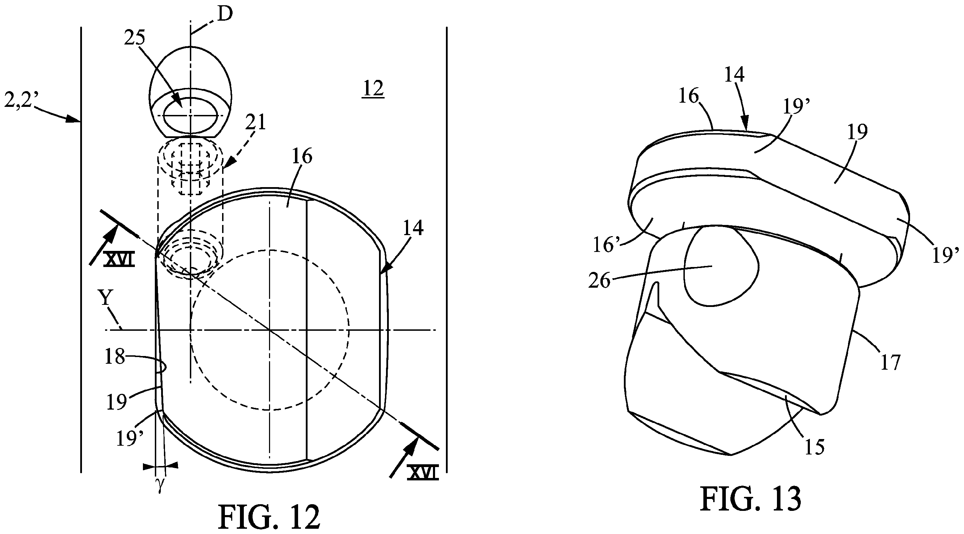

Selon un deuxième mode de réalisation (figures 11 à 16), le perçage 25 d'axe D débouche d'une part dans le trou 10 traversant et d'autre part à l'extérieur de la bague 2 extérieure sur la surface 12 périphérique extérieure. L'axe D du perçage 25 comprend alors une composante parallèle à l'axe A de remplissage et une composante parallèle à la surface 18 de butée radiale. La projection de l'axe D du perçage 25 dans un plan perpendiculaire à l'axe A de remplissage peut toutefois être inclinée par rapport à la surface 18 de butée radiale d'un angle compris entre -60° et +60° autour de la position parallèle à la surface 18 de butée radiale, et de préférence d'au moins +/ou - 30° autour de la position parallèle à la surface 18 de butée radiale. La forme du bouchon 14 est adaptée en conséquence : la position de la surface 26 de maintien est décalée par exemple de 90° autour de l'axe B de bouchon par rapport aux illustrations des figures 2 à 5b, 6, 7, 9 et 10, comme représenté en particulier sur les figures 12, 13, 15 et 16.

Avantageusement, afin d'éviter les contacts ponctuels et les phénomènes de matage lors du serrage du bouchon 14 dans le trou 10 traversant par l'organe 21 de maintien, le contact le bouchon 14 et la bague 2 extérieure peut être spécialement arrangé :
- les arêtes 19' du méplat 19 s'étendant parallèle à l'axe B de bouchon sont rayonnées,
- la surface 11 d'appui axial, à l'intersection avec la surface 18 de butée radiale est creusée, de manière à former un lamage de fond 11' décalé axialement par rapport à la surface 11 d'appui axial et dont un bord 18' est dans le prolongement de la surface 18 de butée radiale.

Ainsi, lorsque le bouchon 14 est mis en place dans le trou 10 traversant de la bague 2, la surface 16' inférieure de la portion 16 de tête est en contact avec la surface 11 d'appui axial, et à distance du fond 11' du lamage. Le bouchon 14 est en contact avec la surface 18 de butée radiale uniquement par le méplat 19 et ses arêtes 19' rayonnées, de sorte que les contacts quasi-ponctuels sont supprimés, évitant la concentration des contraintes et/ou d'éventuels matages locaux par contact ponctuel lors du blocage du bouchon 14 par la vis 21.

Le lamage de fond 11' sur la surface 11 d'appui axial est obtenue par exemple par fraisage.

Ainsi, le système de blocage peut prendre :
- un état actif pour fixer le bouchon 14 sur la bague 2 extérieure, dans lequel l'organe 21 de maintien s'étend dans le perçage 22 de la bague 2 extérieure et dans lequel l'extrémité 22 de contact est en appui contre la surface 26 de maintien du bouchon 14 par au moins un point de contact ; et
- un état inactif dans lequel le bouchon 14 peut être désassemblé de la bague 2 extérieure, ouvrant ainsi le trou 10 traversant de révolution, pour permettre de faire passer des corps 5 roulants du roulement 1 à travers le trou 10 traversant.

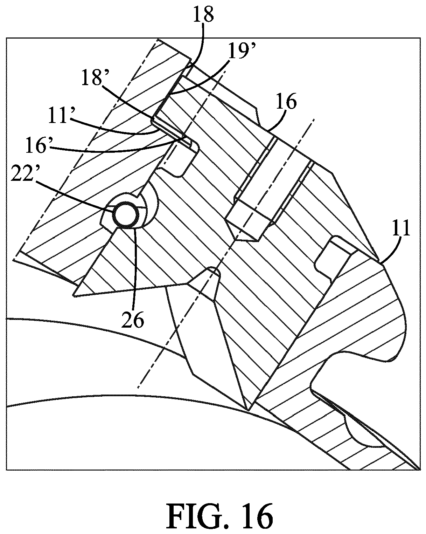

Ainsi, dans l'état actif, lorsque l'extrémité 22 de contact de l'organe 21 de maintien est en contact avec la surface 26 de maintien, l'organe 21 de maintien exerce un effort sur le bouchon 14 tendant à le maintenir à la profondeur prédéterminée, la face 16' inférieure du chapeau de l'extrémité 16 de tête étant en appui contre la surface 11 d'appui axial et l'extrémité 15 de pied étant au niveau de la surface 8 de roulement de la bague 2 extérieure. En outre, le méplat 19 sur l'extrémité 16 de tête coopérant avec la face 18 de butée radiale assure l'orientation adéquate du bouchon 14 autour de l'axe A de remplissage de sorte que la forme en V de l'extrémité 15 de pied est alignée avec la forme en V de la surface 8 de roulement. La longueur de l'organe 21 de maintien est de préférence inférieure à la longueur du perçage 25 de la bague 2 extérieure, de sorte que lorsque l'extrémité 22 de contact de l'organe 21 de maintien est en contact avec la surface 26 de maintien, l'organe 21 de maintien est complètement à l'intérieur de la bague 2 extérieure, sans comprendre de portion émergeante qui pourrait gêner le bon fonctionnement mécanique de l'ensemble dans lequel est intégré le roulement 1. De même, la surface 11 d'appui axial forme un renfoncement sur la bague 2 extérieure d'une dimension suffisante pour que lorsque la surface 16' inférieure de la portion 16 de tête du bouchon 14 vient en appui contre la surface 11 d'appui axial, la portion 16 de tête du bouchon 14 est complètement comprise à l'intérieur du logement, sans portion émergeante au-delà de la surface 12 périphérique extérieure de la bague 2 extérieure. Comme visible sur la figure 16, la surface supérieure de l'extrémité 16 de tête du bouchon peut être biseautée pour s'adapter à la forme générale de la bague 2 extérieure.

En d'autres termes, grâce notamment à l'angle α de maintien différent de 90°, dans l'état actif, l'organe 21 de maintien plaque le bouchon 14 contre deux surfaces de référence que sont la surface 11 d'appui axial et la face 18 de butée radiale, qui peuvent être perpendiculaires l'une à l'autre, mais pas nécessairement. De préférence, l'angle α de maintien est compris entre 30° et 60° afin d'exercer les efforts déterminés pour bloquer le bouchon 14. Il est par exemple égal à 45°.

Le décalage d entre l'axe B du bouchon et la normale N de la surface de maintien au barycentre du contact ente l'organe 21 de maintien et la surface 26 de maintien représente de préférence au moins 10% du diamètre de la surface 17 latérale de révolution du bouchon.

La surface 26 de maintien est écartée de la surface 16' inférieure du chapeau d'une distance selon l'axe B du bouchon 14 correspondant au diamètre de la surface 17 latérale du bouchon 14. Plus précisément, le barycentre du contact entre la surface 26 de maintien et l'extrémité 22 de contact de l'organe 21 de maintien est à une distance, selon l'axe B du bouchon 14, correspondant au diamètre de la surface 17 latérale du bouchon 17.

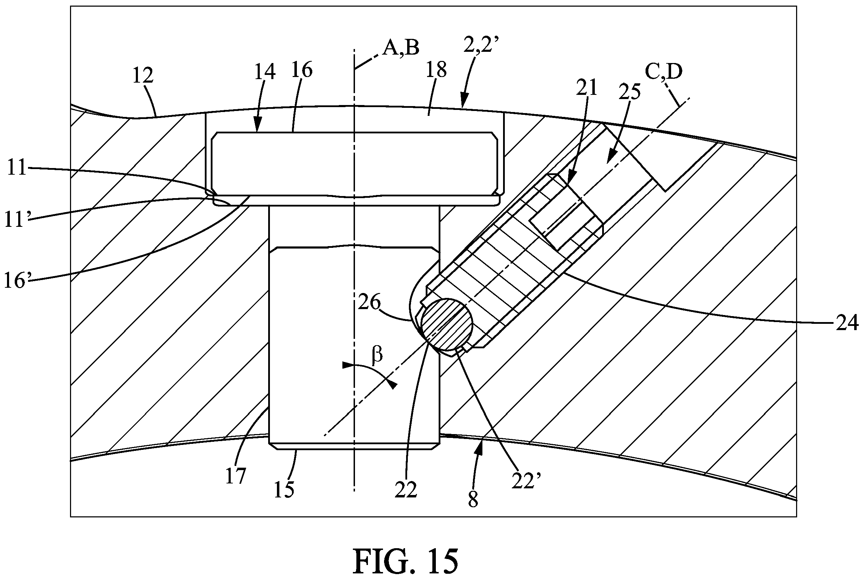

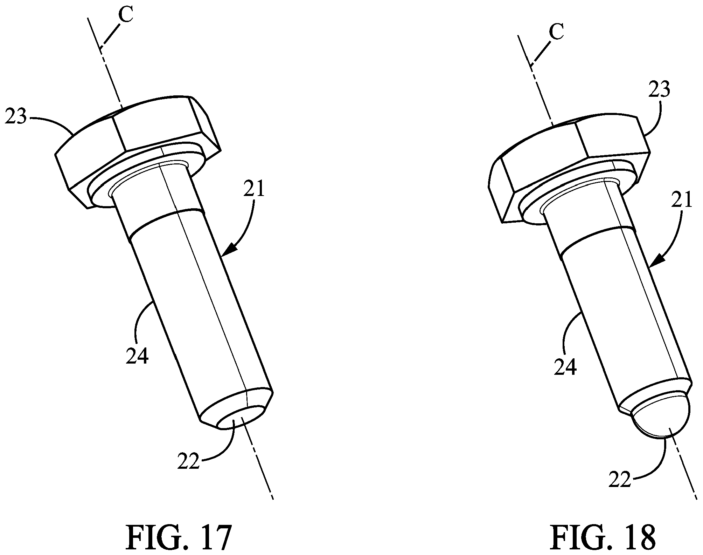

Selon une première variante de réalisation, l'extrémité 22 de contact de l'organe 21 de maintien est une surface plane (figure 17), et la surface 26 de maintien est également une surface plane. Le contact entre l'organe 21 de maintien et la surface 26 de maintien est alors un appui plan, comprenant une pluralité de points de contact. Par exemple, l'extrémité 22 de contact est un disque, la pluralité de points de contact sur la surface 26 de maintien correspondant à ce disque. Le barycentre du contact est alors le centre du disque formé par les points de contacts.
Lorsque le contact entre l'organe 21 de maintien et la surface 26 de maintien est assuré par une pluralité de points de contact, l'ensemble des points de contact est de préférence à distance de l'axe B du bouchon ou, plus précisément, à distance du premier plan contenant l'axe B du bouchon et parallèle au deuxième plan. Ainsi, l'ensemble des points de contact participe au blocage de la rotation du bouchon 14 autour de l'axe A de remplissage.
Selon une deuxième variante de réalisation, l'extrémité 22 de contact de l'organe 21 de maintien est une surface convexe (figures 15 et 18), par exemple formée par une bille 22', et la surface 26 de maintien est une surface plane. Le contact entre l'organe 21 de maintien et la surface 26 de maintien est alors un contact ponctuel, ou pseudo-ponctuel, le point de contact déterminant le barycentre du contact.
Le roulement 1 peut comprendre des moyens, non représentés, pour assurer son étanchéité. Par exemple, des logements sur la bague 2 extérieure et / sur le bouchon 14 et l'organe 21 de maintien peuvent être prévus pour l'installation de joints.
Pour assembler le roulement 1, la bague 2 extérieure est assemblée à la bague 3 intérieure de manière à ménager l'espace 4 de roulement entre leurs surfaces 8, 9 de roulement respectives. Les corps 5 roulants sont insérés depuis l'extérieur du roulement 1 dans l'espace 4 de roulement par le trou 10 traversant. Lorsque l'espace 4 de roulement est rempli, le système de bouchage est mis en place. A cet effet, le bouchon 14 est inséré dans le trou 10 traversant de sorte que l'axe B du bouchon 14 est sensiblement confondu avec l'axe A de remplissage. Le bouchon 14 trouve l'orientation prédéterminée autour de l'axe A de remplissage grâce notamment au méplat 19 coopérant avec la face 18 de butée radiale. La profondeur prédéterminée du bouchon 14 est atteinte lorsque la face 16' inférieure sur le chapeau de l'extrémité 16 de tête du bouchon 14 est mise en contact avec la surface 11 d'appui axial. L'orientation et la profondeur prédéterminées assurent que l'extrémité 15 de pied arrive au niveau de la surface 8 de roulement de la bague 2 extérieure et en assure la continuité. Le système de blocage est mis alors en place en insérant l'organe 21 de maintien, par exemple sous forme de vis filetée, dans le perçage 25 muni du taraudage complémentaire à la vis. L'organe 21 de maintien est inséré dans le perçage 25 de sorte que son axe C est sensiblement confondu avec l'axe D de blocage, jusqu'à ce que son extrémité 22 de contact soit en appui sur la surface 26 de maintien du bouchon 14. Selon l'exemple des figures, l'angle ß du perçage 25 étant égal à l'angle α de maintien, l'axe C de l'organe 21 de maintien est sensiblement confondu avec la normale N à la surface 26 de maintien au barycentre du contact. Le bouchon 14 est ainsi bloqué à la profondeur et avec l'orientation prédéterminées. Le système de blocage est ainsi dans son état actif.

Le roulement 1 peut ainsi être dépourvu de cage, puisque les corps 5 roulants n'ont pas besoin d'être retenus par une telle cage lors de l'assemblage du roulement.

Lorsque le roulement 1 doit être désassemblé, le système de blocage est passé dans son état inactif en retirant l'organe 21 de maintien du perçage 22. Le bouchon 14 peut alors être retiré hors du trou 10 traversant, et les corps 5 roulants peuvent être récupérés hors du roulement 1.

## Revendications

1. Système de bouchage pour une bague **(2, 3)** de roulement **(1)** comprenant un corps **(2')** principal annulaire autour d'un axe **(X)** de roulement, le corps **(2')** principal présentant une surface **(6)** périphérique interne et une surface **(12)** externe opposée à la surface **(6)** périphérique interne, l'une des surfaces (**6, 12**) périphériques interne et externe comprenant une surface (**8**, **9)** de roulement pour des corps **(5)** roulants du roulement **(1),** le corps **(2')** principal annulaire comprenant en outre un trou **(10)** traversant de révolution d'axe **(A)** dit de remplissage, débouchant d'une part sur la surface **(8,9)** de roulement et d'autre part sur une surface **(11)** d'appui axial,
le système de bouchage comprenant :
- un bouchon **(14)** montable juste pour s'étendre dans le trou **(10)** traversant de révolution du corps **(2')** principal, le bouchon **(14)** comprenant une extrémité **(15)** de pied, une extrémité **(16)** de tête , une surface **(17)** latérale de révolution autour d'un axe **(B)** de bouchon **(14)** et une surface (**19**) non cylindrique destinée à coopérer avec une face (**18**) de butée radiale du corps (**2'**) ;
- des moyens de mise en place dans une position prédéterminée du bouchon **(14)** par rapport au corps **(2')** principal, dans laquelle une orientation du bouchon **(14)** autour de l'axe **(A)** de remplissage et une profondeur du bouchon **(14)** selon l'axe **(A)** de remplissage sont déterminées de sorte que l'extrémité **(15)** de pied du bouchon **(14)** et la surface (**8, 9)** de roulement du corps **(2')** principal sont continues l'une avec l'autre, formant ensemble un chemin de roulement pour les corps **(5)** roulants, les moyens de mise en place comprenant un moyen de butée radiale selon un axe **(Y)** de positionnement du corps **(2')** principal et un moyen de butée selon l'axe **(A)** de remplissage coopérant avec la surface **(11)** d'appui axiale, l'axe **(Y)** de positionnement étant non-parallèle à l'axe **(A)** de remplissage ;
- un système de blocage de l'orientation et de la profondeur prédéterminées du bouchon **(14)** dans le trou **(10)** traversant du corps **(2')** principal, le système de blocage comprenant un organe **(21)** de maintien présentant une extrémité **(22)** de contact, le système de blocage comprenant de plus une surface **(26)** de maintien ménagée sur la surface **(17)** latérale du bouchon **(14),** la normale **(N)** à la surface **(26)** de maintien étant inclinée par rapport à l'axe **(B)** du bouchon **(14)** d'un angle **(α)** de maintien différent de 90° dans un plan parallèle à l'axe **(B)** du bouchon **(14),** et étant orientée vers l'extrémité **(16)** de tête du bouchon **(14),** l'axe **(B)** du bouchon **(14)** étant en outre décalé par rapport à la normale **(N)** de la surface **(26)** de maintien considérée au barycentre du contact entre l'organe **(21)** de maintien
et la surface **(26)** de maintien ;
le système de blocage pouvant prendre un état actif pour bloquer le bouchon **(14)** sur le corps **(2')** principal, dans lequel, l'organe **(21)** de maintien s'étendant dans un perçage **(25)** du corps **(2')** principal qui débouche sur le trou **(10)** traversant de révolution, l'extrémité **(22)** de contact de l'organe **(21)** de maintien est en appui contre la surface **(26)** de maintien du bouchon **(14)** par au moins un point de contact, l'organe (**21**) de maintien exerçant un couple tendant à faire pivoter le bouchon (**14**) autour de l'axe A jusqu'à ce que la surface (**19**) non cylindrique vienne en butée contre la face (**18**) de butée radiale du corps (**2'**), et un état inactif dans lequel le bouchon **(14)** peut être désassemblé du corps **(2')** principal ouvrant ainsi le trou **(10)** traversant de révolution pour permettre de faire passer des corps **(5)** roulants du roulement **(1)** à travers le trou **(10)** traversant de révolution.

2. Système de bouchage selon la revendication 1, dans lequel l'extrémité **(22)** de contact de l'organe **(21)** de maintien est une surface plane et dans lequel la surface **(26)** de maintien est une surface plane, de sorte que le contact entre le bouchon **(14)** et l'organe **(21)** de maintien est un appui plan comprenant une pluralité de points de contact.

3. Système de bouchage selon la revendication 1, dans lequel l'extrémité **(22)** de contact de l'organe **(21)** de maintien est une surface convexe et dans lequel la surface **(26)** de maintien est une surface plane, de sorte que le contact entre le bouchon **(14)** et l'organe **(21)** de maintien est un contact ponctuel.

4. Système de bouchage selon l'une quelconque des revendications précédentes, dans lequel tout point de contact entre l'organe **(21)** de maintien et le bouchon **(14)** est à distance de l'axe **(B)** du bouchon **(14).**

5. Système de bouchage selon l'une quelconque des revendications précédentes, dans lequel l'angle **(α)** de maintien est compris entre 30° et 60°.

6. Système de bouchage selon la revendication 5, dans lequel l'angle **(α)** de maintien est égal à 45°.

7. Système de bouchage selon l'une quelconque des revendications précédentes, dans lequel les moyens de mise en place comprennent une surface **(16')** inférieure d'un chapeau de l'extrémité **(16)** de tête du bouchon **(14),** la surface **(16')** inférieure du chapeau étant apte à venir en appui sur la surface **(11)** d'appui axial du corps **(2')** principal lorsque le bouchon **(14)** est placé à la profondeur déterminée par rapport au corps **(2')** principal.

8. Bague **(2, 3)** de roulement **(1)** comprenant :
- un corps **(2')** principal annulaire autour d'un axe **(X)** de roulement, comportant une surface **(6)** interne et une surface **(12)** externe opposée à la surface **(6)** interne, l'une des surfaces **(6, 12)** interne et externe comprenant une surface **(8)** périphérique de roulement pour des corps **(5)** roulants du roulement, le corps **(2')** principal annulaire comprenant un trou **(10)** traversant de révolution d'axe **(A)** dit de remplissage débouchant d'une part sur la surface **(8)** périphérique de roulement et d'autre part sur une surface **(11)** d'appui axial, le corps **(2')** principal annulaire comprenant des moyens de butée radiale selon un axe **(Y)** de positionnement non-parallèle à l'axe **(A)** de remplissage, et le corps **(2')** annulaire comprenant en outre un perçage **(25)** d'axe **(D)** de blocage débouchant dans le trou **(10)** traversant, l'axe **(D)** de blocage étant incliné d'un angle différent de 90° par rapport à l'axe **(A)** de remplissage dans un plan parallèle à l'axe **(A)** de remplissage et à l'axe **(Y)** de positionnement,
- un système de bouchage selon l'une quelconque des revendications précédentes, dans lequel :
• le bouchon **(14)** est monté pour s'étendre dans le trou **(10)** traversant, l'extrémité **(15)** de pied placée au niveau de la surface **(8)** périphérique de roulement du corps **(2')** principal, l'extrémité **(16)** de tête placée au niveau de la surface **(11)** d'appui, l'extrémité **(15)** de pied étant disposée continue avec la surface **(8)** de roulement du corps **(2')** principal et formant avec elle un chemin de roulement pour les corps **(5)** roulants du roulement **(1),**
• le système de blocage du bouchon **(14)** sur le corps **(2')** principal est, dans son état actif, monté pour s'étendre dans le perçage **(25)** débouchant dans le trou **(10)** traversant, pour bloquer le bouchon **(14)** sur le corps **(2')** principal dans une position relative définie dans laquelle le bouchon **(14)** se trouve dans une position prédéterminée, l'organe **(21)** de maintien sollicitant le bouchon **(14)** radialement et parallèlement par rapport à l'axe **(A)** de remplissage.

9. Bague (2, 3) selon la revendication 8, dans laquelle le moyen de butée selon l'axe **(Y)** de positionnement comprend une surface **(19)** non cylindrique formée sur l'extrémité **(16)** de tête du bouchon **(14)** apte à coopérer avec une face **(18)** de butée sur la surface **(11)** d'appui du corps **(2')** principal et dans laquelle le corps (2') principal comprend une face (18) de butée et dans laquelle le système de blocage, dans son état actif, sollicite le bouchon (14) pour placer la surface (19) non cylindrique de l'extrémité (16) de tête du bouchon (14) en contact avec la face (18) de butée sur la surface (11) d'appui du corps (2') principal.

10. Bague **(2, 3)** selon la revendication 8 ou la revendication 9, comprenant un système de bouchage selon la revendication 7, dans lequel le système de blocage, dans son état actif, sollicite le bouchon pour que la face **(16')** inférieure du chapeau de l'extrémité **(16)** de tête soit en contact sur la surface **(11)** d'appui du corps **(2')** principal.

11. Bague **(2, 3)** selon l'une quelconque des revendications 8 à 10, dans lequel l'axe **(A)** de remplissage du corps **(2')** principal forme avec à l'axe **(X)** du roulement un angle compris entre 0° et 90°.

12. Roulement **(1)** comprenant au moins une bague **(3)** intérieure, une bague **(2)** extérieure et des corps **(5)** roulants disposés entre la bague **(3)** intérieure et la bague **(2)** extérieure, et adaptés pour rouler sur une surface (**8, 9)** de roulement de chacune des bagues **(2, 3)** intérieure et extérieure, dans lequel l'une des bagues **(2, 3)** intérieure et extérieure est une bague selon l'une des revendications 8 à 11.

13. Roulement **(1)** selon la revendication 12, dans lequel les corps **(5)** roulants sont des billes, chaque bille ayant au moins un point de contact avec chaque surface (**8, 9)** de roulement.

14. Roulement **(1)** selon la revendication 13, dans lequel la surface **(9)** de roulement sur la bague **(3)** intérieure et la surface (**8**) de roulement sur la bague **(2)** extérieure sont formées chacune par une gorge en V, chacune desdites gorges comportant deux surfaces (**8a, 8b)** tronconiques s'étendant circonférentiellement, et dans lequel les corps **(5)** roulants sont des rouleaux, chaque rouleau présentant deux faces extrêmes plates opposées et une surface cylindrique ou conique, chaque rouleau **(5)** étant placé entre la bague **(3)** intérieure et la bague **(2)** extérieure de sorte que les faces extrêmes de chaque rouleau **(5)** font face chacune à une surface (**8a, 8b)** tronconiques de l'une ou l'autre des bagues **(2, 3)** intérieure et extérieure et que la surface cylindrique ou conique est en contact avec l'autre surface (**8a, 8b)** tronconiques de l'une et l'autre des bagues **(2, 3)** intérieure et extérieure.

15. Roulement **(1)** selon la revendication 14, dans lequel les surfaces (**8a, 8b)** tronconiques de chacune des gorges se croisent à angle droit, le corps **(5)** roulants étant des rouleaux cylindriques.

## Patentansprüche

1. System zum Verschließen eines Rings (2, 3) eines Wälzlagers (1), der einen ringförmigen Hauptkörper (2') um eine Wälzlagerachse (X) enthält, wobei der Hauptkörper (2') eine innere Umfangsfläche (6) und eine äußere Fläche (12) entgegengesetzt zur inneren Umfangsfläche (6) aufweist, wobei eine der inneren und äußeren Umfangsflächen (6, 12) eine Lauffläche (8, 9) für Rollkörper (5) des Wälzlagers (1) umfasst, wobei der ringförmige Hauptkörper (2') außerdem ein drehsymmetrisches Durchgangsloch (10) mit einer so genannten Füllachse (A) enthält, das einerseits an der Lauffläche (8, 9) und andererseits an einer axialen Auflagefläche (11) mündet, wobei das Verschlusssystem umfasst:
- einen Verschluss (14), der genau montierbar ist, um sich im drehsymmetrischen Durchgangsloch (10) des Hauptkörpers (2') zu erstrecken, wobei der Verschluss (14) ein Fußende (15), ein Kopfende (16), eine um eine Achse (B) des Verschlusses (14) drehsymmetrische Seitenfläche (17) und eine nicht zylindrische Fläche (19) umfasst, die dazu bestimmt ist, mit einer radialen Anschlagseite (18) des Körpers (2') zusammenzuwirken;
- Mittel zum Einsetzen des Verschlusses (14) in einer vorbestimmten Stellung bezüglich des Hauptkörpers (2'), wobei eine Ausrichtung des Verschlusses (14) um die Füllachse (A) und eine Tiefe des Verschlusses (14) gemäß der Füllachse (A) so bestimmt werden, dass das Fußende (15) des Verschlusses (14) und die Lauffläche (8, 9) des Hauptkörpers (2') zueinander kontinuierlich sind, indem sie zusammen eine Laufbahn für die Rollkörper (5) bilden, wobei die Mittel zum Einsetzen ein radiales Anschlagmittel gemäß einer Positionierachse (Y) des Hauptkörpers (2') und ein Anschlagmittel gemäß der Füllachse (A) umfassen, die mit der axialen Auflagefläche (11) zusammenwirkt, wobei die Positionierachse (Y) nicht zur Füllachse (A) parallel ist;
- ein Blockiersystem der vorbestimmten Ausrichtung und Tiefe des Verschlusses (14) im Durchgangsloch (10) des Hauptkörpers (2'), wobei das Blockiersystem ein Halteorgan (21) umfasst, das ein Kontaktende (22) aufweist, wobei das Blockiersystem zusätzlich eine Haltefläche (26) umfasst, die an der Seitenfläche (17) des Verschlusses (14) vorgesehen ist, wobei die Normale (N) zur Haltefläche (26) bezüglich der Achse (B) des Verschlusses (14) um einen Haltewinkel (α) anders als 90° in einer Ebene parallel zur Achse (B) des Verschlusses (14) geneigt ist, und zum Kopfende (16) des Verschlusses (14) ausgerichtet ist, wobei die Achse (B) des Verschlusses (14) außerdem bezüglich der Normalen (N) der betreffenden Haltefläche (26) zum Schwerpunkt des Kontakts zwischen dem Halteorgan (21) und der Haltefläche (26) versetzt ist;
wobei das Blockiersystem einen aktiven Zustand einnehmen kann, um den Verschluss (14) auf dem Hauptkörper (2') zu blockieren, wobei das Halteorgan (21) sich in einer Bohrung (25) des Hauptkörpers (2') erstreckt, die am drehsymmetrischen Durchgangsloch (10) mündet, wobei das Kontaktende (22) des Halteorgans (21) gegen die Haltefläche (26) des Verschlusses (14) durch mindestens einen Kontaktpunkt in Auflage ist, wobei das Halteorgan (21) ein Drehmoment ausübt, das dahin tendiert, den Verschluss (14) um die Achse A schwenken zu lassen, bis die nicht zylindrische Fläche (19) gegen die radiale Anschlagseite (18) des Körpers (2') in Anschlag kommt, und einen inaktiven Zustand einnehmen kann, in dem der Verschluss (14) vom Hauptkörper (2') getrennt werden kann, wodurch das drehsymmetrische Durchgangsloch (10) geöffnet wird, um den Durchlass der Rollkörper (5) des Wälzlagers (1) durch das drehsymmetrische Durchgangsloch (10) zu ermöglichen.

2. Verschlusssystem nach Anspruch 1, wobei das Kontaktende (22) des Halteorgans (21) eine ebene Fläche ist, und wobei die Haltefläche (26) eine ebene Fläche ist, so dass der Kontakt zwischen dem Verschluss (14) und dem Halteorgan (21) eine ebene Auflage ist, die eine Vielzahl von Kontaktpunkten umfasst.

3. Verschlusssystem nach Anspruch 1, wobei das Kontaktende (22) des Halteorgans (21) eine konvexe Fläche ist, und wobei die Haltefläche (26) eine ebene Fläche ist, so dass der Kontakt zwischen dem Verschluss (14) und dem Halteorgan (21) ein punktförmiger Kontakt ist.

4. Verschlusssystem nach einem der vorhergehenden Ansprüche, wobei jeder Kontaktpunkt zwischen dem Halteorgan (21) und dem Verschluss (14) in Abstand zur Achse (B) des Verschlusses (14) ist.

5. Verschlusssystem nach einem der vorhergehenden Ansprüche, wobei der Haltewinkel (α) zwischen 30° und 60° liegt.

6. Verschlusssystem nach Anspruch 5, wobei der Haltewinkel (α) gleich 45° ist.

7. Verschlusssystem nach einem der vorhergehenden Ansprüche, wobei die Mittel zum Einsetzen eine untere Fläche (16') einer Kappe des Kopfendes (16) des Verschlusses (14) umfassen, wobei die untere Fläche (16') der Kappe dazu geeignet ist auf die axiale Auflagefläche (11) des Hauptkörpers (2') in Auflage zu kommen, wenn der Verschluss (14) in der bestimmten Tiefe bezüglich des Hauptkörpers (2') platziert wird.

8. Ring (2, 3) eines Wälzlagers (1), der umfasst:
- einen ringförmigen Hauptkörper (2') um eine Wälzlagerachse (X), der eine Innenfläche (6) und eine Außenfläche (12) entgegengesetzt zur Innenfläche (6) aufweist, wobei eine der Innen- und Außenflächen (6, 12) eine Umfangslauffläche (8) für Rollkörper (5) des Wälzlagers umfasst, wobei der ringförmige Hauptkörper (2') ein drehsymmetrisches Durchgangsloch (10) mit einer so genannten Füllachse (A) umfasst, das einerseits an der Umfangslauffläche (8) und andererseits an einer axialen Auflagefläche (11) mündet, wobei der ringförmige Hauptkörper (2') radiale Anschlagmittel gemäß einer Positionierachse (Y) umfasst, die nicht parallel zur Füllachse (A) ist, und der ringförmige Körper (2') außerdem eine Bohrung (25) mit einer Blockierachse (D) umfasst, die in das Durchgangsloch (10) mündet, wobei die Blockierachse (D) um einen Winkel anders als 90° bezüglich der Füllachse (A) in einer Ebene parallel zur Füllachse (A) und zur Positionierachse (Y) geneigt ist,
- ein Verschlusssystem nach einem der vorhergehenden Ansprüche, wobei:
o der Verschluss (14) montiert wird, um sich im Durchgangsloch (10) zu erstrecken, wobei das Fußende (15) im Bereich der Umfangslauffläche (8) des Hauptkörpers (2') und das Kopfende (16) im Bereich der Auflagefläche (11) platziert sind, wobei das Fußende (15) kontinuierlich mit der Lauffläche (8) des Hauptkörpers (2') angeordnet ist und mit ihr eine Laufbahn für die Rollkörper (5) des Wälzlagers (1) bildet,
o in seinem aktiven Zustand das Blockiersystem des Verschlusses (14) auf dem Hauptkörper (2') montiert ist, um sich in der Bohrung (25) zu erstrecken, die im Durchgangsloch (10) mündet, um den Verschluss (14) auf dem Hauptkörper (2') in einer definierten relativen Stellung zu blockieren, in der der Verschluss (14) sich in einer vorbestimmten Stellung befindet, wobei das Halteorgan (21) den Verschluss (14) radial und parallel bezüglich der Füllachse (A) beaufschlagt.

9. Ring (2, 3) nach Anspruch 8, wobei das Anschlagmittel gemäß der Positionierachse (Y) eine am Kopfende (16) des Verschlusses (14) geformte nicht zylindrische Fläche (19) umfasst, die dazu geeignet ist, mit einer Anschlagseite (18) auf der Auflagefläche (11) des Hauptkörpers (2') zusammenzuwirken, und wobei der Hauptkörper (2') eine Anschlagseite (18) umfasst, und wobei das Blockiersystem in seinem aktiven Zustand den Verschluss (14) beaufschlagt, um die nicht zylindrische Fläche (19) des Kopfendes (16) des Verschlusses (14) mit der Anschlagseite (18) auf der Auflagefläche (11) des Hauptkörpers (2') in Kontakt zu bringen.

10. Ring (2, 3) nach Anspruch 8 oder Anspruch 9, der ein Verschlusssystem nach Anspruch 7 umfasst, wobei das Blockiersystem in seinem aktiven Zustand den Verschluss beaufschlagt, damit die untere Seite (16') der Kappe des Kopfendes (16) auf der Auflagefläche (11) des Hauptkörpers (2') in Kontakt ist.

11. Ring (2, 3) nach einem der Ansprüche 8 bis 10, wobei die Füllachse (A) des Hauptkörpers (2') mit der Achse (X) des Wälzlagers einen Winkel zwischen 0° und 90° bildet.

12. Wälzlager (1), das mindestens einen inneren Ring (3), einen äußeren Ring (2) und Rollkörper (5) umfasst, die zwischen dem inneren Ring (3) und dem äußeren Ring (2) angeordnet und geeignet sind, auf einer Lauffläche (8, 9) jedes der inneren und äußeren Ringe (2, 3) zu rollen, wobei einer der inneren und äußeren Ringe (2, 3) ein Ring nach einem der Ansprüche 8 bis 11 ist.

13. Wälzlager (1) nach Anspruch 12, wobei die Rollkörper (5) Kugeln sind, wobei jede Kugel mindestens einen Kontaktpunkt mit jeder Lauffläche (8, 9) hat.

14. Wälzlager (1) nach Anspruch 13, wobei die Lauffläche (9) auf dem inneren Ring (3) und die Lauffläche (8) auf dem äußeren Ring (2) jeweils von einer V-förmigen Rille geformt werden, wobei jede der Rillen zwei kugelstumpfförmige Flächen (8a, 8b) aufweist, die sich in Umfangsrichtung erstrecken, und wobei die Rollkörper (5) Rollen sind, wobei jede Rolle zwei entgegengesetzte flache Endseiten und eine zylindrische oder kegelförmige Fläche aufweist, wobei jede Rolle (5) zwischen dem inneren Ring (3) und dem äußeren Ring (2) platziert ist, so dass die Endseiten jeder Rolle (5) jeweils einer kegelstumpfförmigen Fläche (8a, 8b) des einen oder anderen der inneren und äußeren Ringe (2, 3) gegenüberliegen, und dass die zylindrische oder kegelförmige Fläche mit der anderen kegelstumpfförmigen Fläche (8a, 8b) des einen und anderen der inneren und äußeren Ringe (2, 3) in Kontakt ist.

15. Wälzlager (1) nach Anspruch 14, wobei die kegelstumpfförmigen Flächen (8a, 8b) jeder der Rillen sich im rechten Winkel kreuzen, wobei die Rollkörper (5) zylindrische Rollen sind.

## Claims

1. Plugging system for a bearing **(1)** race **(2, 3)** comprising a main annular body **(2')** about a bearing axis **(X),** the main body **(2')** having an inner peripheral surface **(6)** and an outer surface **(12)** opposite the inner peripheral surface **(6),** one of the inner and outer peripheral surfaces **(6, 12)** comprising a bearing surface (**8, 9)** for rolling bodies **(5)** of the bearing **(1),** the main annular body **(2')** further comprising a circular through hole **(10)** having an axis **(A),** called filling axis, said through hole opening out, on the one hand, on the bearing surface (**8, 9)** and, on the other hand, on an axial support surface **(11),**
the plugging system comprising:
- a plug **(14)** that can be tightly fitted to extend into the circular through hole **(10)** of the main body **(2'),** the plug **(14)** comprising a bottom end **(15),** a top end **(16),** a circular lateral surface **(17)** about an axis **(B)** of the plug **(14)** and a non-cylindrical surface **(19)** intended to cooperate with a radial stop face **(18)** of the body **(2');**
- means for installing the plug **(14)** in a predetermined position relative to the main body **(2'),** in which position an orientation of the plug **(14)** about the filling axis **(A)** and a plug **(14)** depth along the filling axis **(A)** are determined so that the bottom end **(15)** of the plug **(14)** and the bearing surface **(8, 9)** of the main body **(2')** are flush with each other, together forming a bearing track for the rolling bodies **(5),** the installation means comprising a radial stop means along a positioning axis **(Y)** of the main body **(2')** and a stop means along the filling axis **(A)** cooperating with the axial support surface **(11),** the positioning axis **(Y)** being non-parallel to the filling axis **(A);**
- a system for locking the predetermined orientation and depth of the plug **(14)** in the through hole **(10)** of the main body **(2'),** the locking system comprising a retention element **(21)** having a contact end **(22),** the locking system further comprising a retention surface **(26)** arranged on the lateral surface **(17)** of the plug **(14),** the normal line **(N)** on the retention surface **(26)** being inclined relative to the axis **(B)** of the plug **(14)** by a retention angle (α) other than 90° in a plane parallel to the axis **(B)** of the plug **(14),** and being oriented towards the top end **(16)** of the plug **(14),** the axis **(B)** of the plug **(14)** also being offset relative to the normal line **(N)** of the considered retention surface **(26)** at the contact barycentre between the retention element **(21)** and the retention surface **(26);**
the locking system being able to assume an active state for locking the plug **(14)** on the main body **(2'),** in which state, with the retention element **(21)** extending into a perforation **(25)** of the main body **(2')** that opens out on the circular through hole **(10),** the contact end **(22)** of the retention element **(21)** is in abutment against the retention surface **(26)** of the plug **(14)** through at least one contact point, the retention element **(21)** exerting a torque that tends to pivot the plug **(14)** about the axis **(A)** until the non-cylindrical surface **(19)** comes into abutment against the radial stop face **(18)** of the body **(2'),** and an inactive state, in which the plug **(14)** can be disassembled from the main body **(2'),** thus opening the circular through hole **(10)** to allow rolling bodies **(5)** of the bearing **(1)** to pass through the circular through hole **(10).**

2. Plugging system according to claim 1, wherein the contact end **(22)** of the retention element **(21)** is a flat surface and wherein the retention surface **(26)** is a flat surface, so that the contact between the plug **(14)** and the retention element **(21)** is a flat support comprising a plurality of contact points.

3. Plugging system according to claim 1, wherein the contact end **(22)** of the retention element **(21)** is a convex surface and wherein the retention surface **(26)** is a flat surface, so that the contact between the plug **(14)** and the retention element **(21)** is a localised contact.

4. Plugging system according to any one of the preceding claims, wherein any contact point between the retention element **(21)** and the plug **(14)** is remote from the axis **(B)** of the plug **(14).**

5. Plugging system according to any one of the preceding claims, wherein the retention angle **(α)** is between 30° and 60°.

6. Plugging system according to claim 5, wherein the retention angle **(α)** is 45°.

7. Plugging system according to any one of the preceding claims, wherein the installation means comprise a lower surface **(16')** of a cap of the top end **(16)** of the plug **(14),** the lower surface **(16')** of the cap being able to come into abutment against the axial support surface **(11)** of the main body **(2')** when the plug **(14)** is installed at the determined depth relative to the main body **(2').**

8. Bearing **(1)** race **(2, 3)** comprising:
- a main annular body **(2')** about a bearing axis **(X),** comprising an inner surface **(6)** and an outer surface **(12)** opposite the inner surface **(6),** one of the inner and outer surfaces **(6, 12)** comprising a peripheral bearing surface **(8)** for rolling bodies **(5)** of the bearing, the main annular body **(2')** comprising a circular through hole **(10)** having an axis **(A),** called filling axis, said through hole opening out, on the one hand, on the peripheral bearing surface **(8)** and, on the other hand, on an axial support surface **(11),** the main annular body **(2')** comprising radial stop means along a positioning axis **(Y)** that is non-parallel to the filling axis **(A),** and the annular body **(2')** further comprising a perforation **(25),** having a locking axis **(D),** opening out into the through hole **(10),** the locking axis **(D)** being inclined by an angle other than 90° relative to the filling axis **(A)** in a plane parallel to the filling axis **(A)** and to the positioning axis **(Y);**
- a plugging system according to any one of the preceding claims, wherein:
• the plug **(14)** is fitted in order to extend into the through hole **(10),** the bottom end **(15)** being placed on the peripheral bearing surface **(8)** of the main body **(2'),** the top end **(16)** being placed on the support surface (**11**), the bottom end **(15)** being disposed flush with the bearing surface **(8)** of the main body **(2')** and forming a bearing track therewith for the rolling bodies **(5)** of the bearing **(1);**
• the system for locking the plug **(14)** on the main body **(2')** is, in its active state, fitted to extend into the perforation **(25)** opening out into the through hole **(10)** in order to lock the plug **(14)** on the main body **(2')** in a defined relative position, in which the plug **(14)** is in a predetermined position, the retention element **(21)** holding the plug **(14)** radially and parallel to the filling axis **(A).**

9. Race **(2, 3)** according to claim 8, wherein the stop means along the positioning axis **(Y)** comprises a non-cylindrical surface **(19)** formed on the top end **(16)** of the plug **(14)** that is able to cooperate with a stop face **(18)** on the support surface **(11)** of the main body **(2'),** and wherein the main body **(2')** comprises a stop face **(18),** and wherein the locking system, in its active state, holds the plug **(14)** in order to place the non-cylindrical surface **(19)** of the top end **(16)** of the plug **(14)** in contact with the stop face **(18)** on the support surface **(11)** of the main body **(2').**

10. Race **(2, 3)** according to either claim 8 or claim 9, comprising a plugging system according to claim 7, wherein the locking system, in its active state, holds the plug so that the lower face **(16')** of the cap of the top end **(16)** is in contact on the support surface **(11)** of the main body **(2').**

11. Race **(2, 3)** according to any one of claims 8 to 10, wherein the filling axis **(A)** of the main body **(2')** forms, with the bearing axis **(X),** an angle between 0°and 90°.

12. Bearing **(1)** comprising at least one inner race **(3),** one outer race **(2)** and rolling bodies **(5)** disposed between the inner race **(3)** and the outer race **(2)** and adapted to roll on a bearing surface **(8, 9)** of each of the inner and outer races **(2, 3),** wherein one of the inner and outer races **(2, 3)** is a race according to any one of claims 8 to 11.

13. Bearing **(1)** according to claim 12, wherein the rolling bodies **(5)** are balls, each ball having at least one contact point with each bearing surface (**8, 9).**

14. Bearing **(1)** according to claim 13, wherein the bearing surface **(9)** on the inner race **(3)** and the bearing surface (**8**) on the outer race **(2)** are each formed by a V-shaped groove, each of said grooves comprising two truncated surfaces **(8a, 8b)** extending in a circumferential manner, and wherein the rolling bodies **(5)** are rollers, each roller having two opposite, flat end faces and a cylindrical or conical surface, each roller **(5)** being placed between the inner race **(3)** and the outer race **(2)** so that the end faces of each roller **(5)** each face a truncated surface **(8a, 8b)** of the one or the other of the inner and outer races **(2, 3)** and so that the cylindrical or conical surface is in contact with the other truncated surface **(8a, 8b)** of the one and the other of the inner and outer races **(2, 3).**

15. Bearing **(1)** according to claim 14, wherein the truncated surfaces **(8a, 8b)** of each of the grooves intersect at a right angle, the rolling bodies **(5)** being cylindrical rollers.
